# EUROPÄISCHE PATENTSCHRIFT

(11) **EP 2 288 663 B1**
(45) Veröffentlichungstag und Bekanntmachung des Hinweises auf die Patenterteilung: **10.10.2012**
(21) Anmeldenummer: 09757152.5
(22) Anmeldetag: 02.05.2009
(51) Int. Cl.: C09B 67/22, C09B 67/20, C09D 11/00

(54) **VERWENDUNG VON KUPFERPHTHALOCYANINE PIGMENTZUBEREITUNGEN**
USE OF COPPER PHTHALOCYANINE PIGMENT COMPOSITIONS
UTILISATION DE PREPARATIONS PIGMENTAIRE DE PHTALOCYANINE DE CUIVRE

(30) Priorität: 03.06.2008 DE 102008026584
(43) Veröffentlichungstag der Anmeldung: 02.03.2011
(73) Patentinhaber: Clariant Finance (BVI) Limited, Road Town, Tortola (VG)
(72) Erfinder: GEISENBERGER, Josef, 65843 Sulzbach (DE); MACHOLDT, Hans-Tobias, 64297 Darmstadt-Eberstadt (DE); METZ, Thomas, 64646 Heppenheim (DE); SCHNEIDER, Steffen, 60529 Frankfurt am Main (DE); ZEH, Christian, 65343 Eltville (DE)
(74) Vertreter: Hütter, Klaus
(86) Internationale Anmeldenummer: PCT/EP2009/003170
(87) Internationale Veröffentlichungsnummer: WO 2009/146768

(56) Entgegenhaltungen:
- EP-A1- 1 489 143
- EP-A2- 0 621 319
- EP-A2- 0 638 615
- EP-A2- 0 761 770
- EP-A2- 1 146 094
- DE-A1- 2 720 464
- DE-A1- 10 256 416
- GB-A- 1 508 576
- US-A- 3 754 958
- SCHROEDER J: "Surface treatment of pigments" PROGRESS IN ORGANIC COATINGS, ELSEVIER BV, NL, Bd. 16, Nr. 1, 17. Mai 1988 (1988-05-17), Seiten 3-17, XP009112474 ISSN: 0300-9440

## Beschreibung

Die vorliegende Erfindung betrifft ein verbessertes Cyanfarbmittel für Ink Jet Tinten, insbesondere für Lösemittel- und UV-härtende Ink Jet Tinten. Für Ink Jet Tinten werden zunehmend Pigmente als Farbmittel eingesetzt. Pigmente haben gegenüber den löslichen Farbstoffen den Vorteil, dass sie als kleine Festkörperteilchen dispergiert in der Tinte vorliegen und dadurch deutlich bessere Lichtechtheiten, Lösemittel- und Temperaturstabilitäten aufweisen. Insbesondere Cyanfarbmittel auf Basis von beta-Kupferphthalocyaninpigmenten (C.I. Pigment Blue 15:3 und 15:4) zeigen mit die besten Licht-, Lösemittel- und Temperaturstabilitäten und sind daher die am häufigsten eingesetzten Cyanfarbmittel.

Aufgrund der immer schnelleren Ink Jet Druckverfahren, der kleiner werdenden Tröpfchengröße und wegen den erhöhten Qualitätsanforderungen an die Ink Jet Tinten werden verbesserte Kupferphthalocyaninpigmentzubereitungen benötigt. Ein besonders wichtiger Gesichtspunkt ist die Verbesserung der Fließfähigkeit und Verspritzbarkeit der Tinten. Hierfür ist die Stabilität der Tintenviskosität ein entscheidender Parameter. Die Viskosität soll nicht nur einen möglichst niedrigen Wert haben, sondern auch unabhängig von der Scherrate sein. Darüber hinaus ist wichtig, dass diese Viskosität auch nach längerer Tintenlagerzeit gleich bleibt, wobei vor allem eine Unempfindlichkeit gegenüber Temperaturschwankungen wichtig ist. Nur so ist gewährleistet, dass eine Tinte auch nach einer längeren Lagerungszeit noch mit der gleichen Qualität verdruckbar ist.

Es ist bekannt, dass insbesondere Kupferphthalocyaninpigmente einen großen Einfluss auf die Tintenstabilität haben. Entsprechende Alterungstestverfahren messen daher die Viskositätsstabilität von Tinten auf Basis von Pigment Blue 15 nach einer Woche Lagerungszeit bei einer Temperatur von 40°C oder höher.

WO 2004/052997 beschreibt Phthalocyaninpigmentzubreitungen für Drucktinten, die jedoch nicht die für Inkjet-Tinten verlangte Viskositätsstabilität erreichen.

EP 1 073 695 A offenbart Phthalocyaninpigmentzubreitungen für Öldruckfarben und Tiefdruckfarben, die ebenfalls nicht das hohe Anforderungsprofil für Inkjet Tinten erfüllen.

Die EP 0 638 615 A2 und die EP 0 621 319 A2 beschreiben KupferphthalocyaninPigmentzubereitungen, enthaltend quartäre Ammoniumsalze sulfo-substituierter Kupferphthalocyanine, für Tiefdruck-und Offset-Druckfarben.

Die EP 1 489 143 A1 beschreibt ein Verfahren zur Herstellung von beta-Kupferphthalocyaninpigmenten durch Trockenmahlung und Finish in Gegenwart spezieller Phthalocyaninderivate.

Die EP 1 146 094 A2 offenbart wässrige Pigmentdispersionen für Inkjet-Tinten, wobei ein suffo-substituiertes Kupferphthalocyanin-Derivat zum Einsatz kommen kann.

Für neuartige Tintensysteme können die bisherigen Cyanpigmente die gestiegene Anforderungen an die Tintenstabilität nicht mehr ausreichend erfüllen. Gesucht sind daher Cyanpigmente auf Basis von Pigment Blue 15, die nicht nur eine Viskositätsstabilität über die verschiedenen Scherraten zeigen, sondern vor allem auch eine niedrige Viskosität bei sehr langsamen Scherraten sowie nach längerer Lagerungszeit der Tinte bei erhöhten Temperaturen.

Überraschender Weise hat sich nun gezeigt, dass eine beta-Kupferphthalocyaninpigmentzubereitung mit einer Teilchenform mit einem mittlerem Länge-zu-Breite-Verhältnis von kleiner oder gleich 2,0:1, vorzugsweise von 1,6:1 bis 1,9:1, und einer Primärpartikelgrößenverteilung von ≤ 80 nm als d₅₀-Wert, vorzugsweise von 60 nm bis 75 nm als d₅₀-Wert, und einer Oberflächenladung von -2.5 bis -3.5 C/g eine deutlich verbesserte Viskosität und Viskositätsstabilität besitzt, insbesondere in lösemittelbasierenden als auch in UV-härtenden Tinten.

Neu und überraschend ist, dass die erfindungsgemäße Pigmentzubereitung im Vergleich zu anderen Kupferphthalocyaninzubereitungen, die eine vergleichbare Partikelgrößenverteilung besitzen, aber nicht die gleiche Oberflächenladung, oder im Vergleich zu Kupferphthalocyaninzubereftungen, die zwar die gleiche Oberflächenladung aber nicht eine vergleichbare Primärkomgröße und -form besitzen, eine signifikant schlechtere Viskosität bei verschiedenen Scherraten und eine schlechtere Viskositätsstabilität zeigen. Nur die Kombination aus der oben genannten Oberflächenladung, Pigmentgröße und -form, liefert die verbesserte Eigenschaft in der Anwendung.

Es wurde gefunden, dass das spezielle Pigmentadditiv der nachstehenden Formel (II) dem Kupferphthalocyaninpigment die gewünschte Oberflächenladung verleiht.

Gegenstand der Erfindung ist daher die Verwendung eine Pigmentzubereitung, enthaltend
(a) pigmentäres Kupfer-Phthalocyanin der beta-Phase, gekennzeichnet durch eine mittlere Teilchengröße d₅₀ von 40 bis 80 nm, vorzugsweise 50 bis 75 nm, und ein mittleres Länge-Breite-Verhältnis der Pigmentteilchen von kleiner oder gleich 2,0 : 1; vorzugsweise 1,6 : 1 bis 1,9 : 1, und
(b) 1 bis 30 Gew.%, vorzugsweise 5 bis 20 Gew.%, bezogen auf das Gewicht des pigmentären Kupfer-Phthalocyanins, eines Pigmentdispergators der Formel (II) 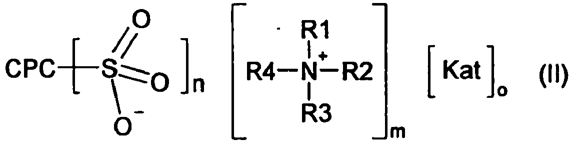 wobei
   - CPC: ein Rest eines Kupferphthalocyanins,
   - n: eine Zahl von 1 bis 4,0, vorzugsweise 1 bis 2,0;
   - m: eine Zahl von 0,5 bis 4,0, vorzugsweise 0,7 bis 2,0:
   - Kat: ein Kation aus der Gruppe der Alkalimetalle, wie z.B. Li, Na, K; oder H⁺;
   - o: eine Zahl von 0 bis 3,5, wobei n = m+o gilt;
   - R¹, R², R³, R⁴: gleich oder verschieden sind und C₁-C₂₀ -Alkyl, C₂-C₂₀-Alkenyl, C₅-C₂₀-Cycloalkyl, C₅-C₂₀-Cycloalkenyl oder C₁-C₄-Alkyl-phenyl bedeuten, wobei die vorstehend genannten Reste gegebenenfalls durch Hydroxy und/oder Halogen substituiert sind, bedeuten, zum Pigmentieren von Inkjet-Tinten, electrophotosgraphischen Tonern und buturickbern und Farbliltern

Unter pigmentärem Kupfer-Phthalocyanin der beta-Phase werden insbesondere C.I. Pigment Blue 15:3 und 15:4 verstanden.

Der Rest CPC bedeutet vorzugsweise ein Rest der Formel (I)

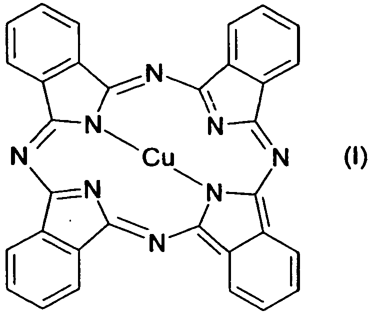

In einer bevorzugten Ausführungsform der Erfindung bedeuten die Reste
- R¹, R², R³: C₁-C₄-Alkyl, und
- R⁴: C₁₂-C₂₀-Alkyl, C₁₂-C₂₀-Alkenyl, C₆-C₂₀-Cycloalkyl, C₆-C₂₀-Cycloalkenyl oder Benzyl, wobei die vorstehend genannten Reste gegebenenfalls durch Hydroxy und/oder Halogen, wie z. B. F, Cl, Br, insbesondere F oder Cl, substituiert sind.

In einer weiteren bevorzugten Ausführungsform bedeuten die Reste
- R¹, R²: C₁-C₄-Alkyl, und
- R³, R⁴: C₆-C₂₀-Alkyl, C₆-C₂₀-Alkenyl, C₆-C₂₀-Cycloalkyl, C₆-C₂₀-Cycloalkenyl oder Benzyl, wobei die vorstehend genannten Reste gegebenenfalls durch Hydroxy und/oder Halogen, wie z. B. F, Cl, Br, insbesondere F oder Cl, substituiert sind.

In einer besonders bevorzugten Ausführungsform bedeuten die Reste
- R¹, R², R³: Methyl, und
- R⁴: C₁₄-C₂₀-Alkyl oder C₁₄-C₂₀-Alkenyl.

In einer weiteren besonders bevorzugten Ausführungsform bedeuten die Reste
- R¹, R²,: Methyl, und
- R³, R⁴: Benzyl, C₈-C₂₀-Alkyl oder C₈-C₂₀-Alkenyl.

Beispiele für bevorzugte Reste N⁺R¹R²R³R⁴ sind Trimethylhexyl-, Trimethyloctyl-, Trimethyldecyl-, Trimethylcetyl-, Trimethyllauryl-, Trimethylstearyl-, Distearyldimethyl-, Dimethylstearylbenzyl-Ammonium.

Die erfindungsgemäß verwendeten Pigmentzubereitungen werden hergestellt, indem man ein Kupfer-Phthalocyaninrohpigment einer Salzknetung mit einem kristallinen anorganischen Salz in Gegenwart eines organischen Lösemittels unterwirft und vor, während und/oder nach der Salzknetung einen Pigmentdispergator der Formel (11) zusetzt.

Als kristallines anorganisches Salz kommen beispielsweise Aluminiumsulfat, Natriumsulfat, Calciumchlorid, Kaliumchlorid oder Natriumchlorid in Betracht, bevorzugt Natriumsulfat, Natriumchlorid und Kaliumchlorid.

Als organisches Lösemittel kommen beispielsweise Ketone, Ester, Amide, Sulfone, Sulfoxide, Nitroverbindungen, Mono-, Bis- oder Tris-hydroxy-C₂-C₁₂-alkane, die mit C₁-C₈-alkyl und einer oder mehreren Hydroxygruppen substituiert sein können, in Betracht. Besonders bevorzugt sind mit Wasser mischbare hochsiedende organische Lösemittel auf Basis von monomeren, oligomeren und polymeren C₂-C₃-Alkylenglykolen, wie z. B. Diethylenglykol, Diethylenglykolmonomethyl- und ethylether, Triethylenglykol, Triethylenglykolmonomethyl- und ethylether, Dipropylenglykol, Dipropylenglykolmonomethyl- und ethylether, Propylenglykolmonomethyl- und ethylether und flüssige Polyethylen- und Polypropylenglykole, N-Methylpyrrolidon sowie weiterhin Triacetin, Dimethylformamid, Dimethylacetamid, Ethyl-methylketon, Cyclohexanon, Diacetonalkohol, Butylacetat, Nitromethan, Dimethylsulfoxid und Sulfolan.

Das Gewichtsverhältnis zwischen dem anorganischen Salz und dem Kupferphthalocyanin beträgt bevorzugt (2 bis 8) zu 1, insbesondere (5 bis 7) zu 1. Das Gewichtsverhältnis zwischen dem organischen Lösemittel und dem anorganischen Salz beträgt bevorzugt (1 ml : 6 g) bis (3 ml : 7 g).

Das Gewichtsverhältnis zwischen dem organischen Lösemittel und der Summe aus anorganischem Salz und Kupferphthalocyanin beträgt bevorzugt (1 ml : 2,5 g) bis (1 ml : 7,5 g).

Die Temperatur während der Knetung kann zwischen 40 und 140 °C, vorzugsweise 80 bis 120 °C, betragen. Die Knetdauer beträgt zweckmäßigerweise 4 h bis 12 h, bevorzugt 6 h bis 8 h.

Nach der Salzknetung wird das anorganische Salz und das organische Lösemittel zweckmäßigerweise durch Waschen mit Wasser entfernt und die so erhaltene Pigmentkomposition nach üblichen Verfahren getrocknet.

Gegebenenfalls schließt sich an die Salzknetung eine Lösemittelbehandlung an. Die Lösemittelbehandlung kann in Wasser oder in einem organischen Lösemittel erfolgen. Wird ein organisches Lösemittel eingesetzt, so kann dies bevorzugt aus der Gruppe der Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykolmonoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Aceton, Diethylketon, Methylisobutylketon, Methylethylketon, Methylisobutylketon oder Cyclohexanon; eine mono-, bis oder tris-Hydroxy-C₂-C₁₂-alkan-Verbindung, die 1 oder 2 Ketogruppen enthält und bei der eine oder mehr Hydroxylgruppen mit einem C₁-C₈-Alkylrest verethert oder mit einem C₁-C₈-Alkylcarbonylrest verestert sein kann; aliphatische Säureamide, wie Dimethylformamid,; oder cyclische Carbonsäureamide, wie N-Methylpyrrolidon oder aromatische Kohlenwasserstoffe, wie Benzol oder durch Alkyl, Alkoxy, Nitro, Cyano oder Halogen substituiertes Benzol, beispielsweise Toluol, Xylole, Mesitylen, Ethylbenzol, Anisol, Nitrobenzol, Chlorbenzol, Dichlorbenzole, Trichlorbenzole, Benzonitril oder Brombenzol; oder andere substituierte Aromaten, wie Phenole, Kresole, Nitrophenole, wie beispielsweise o-Nitrophenol sowie Mischungen dieser organischen Lösemittel sein.

Bevorzugte Lösemittel sind C₁-C₆-Alkohole, insbesondere Methanol, Ethanol, n- und Isopropanol, Isobutanol, n- und tert.-Butanol und tert.-Amylalkohol; C₃-C₆-Ketone, insbesondere Aceton, Methylethylketon oder Diethylketon; Tetrahydrofuran, Dioxan, Ethylenglykol, Diethylenglykol oder Ethylenglykol-C₃-C₅-alkylether, insbesondere 2-Methoxyethanol, 2-Ethoxyethanol, Butylglykol, Toluol, Xylol, Ethylbenzol, Chlorbenzol, o-Dichlorbenzol, Nitrobenzol, Cyclohexan, Diacetonalkohol oder Methylcyclohexan.

Das Lösemittel kann auch Wasser, Säuren oder Laugen enthalten.

Besonders bevorzugt erfolgt die Lösemittelbehandlung in Wasser.

Die Lösemittelbehandlung wird zweckmäßigerweise für 1 bis 8 h und bei einer Temperatur zwischen 30 und 200 °C, vorzugsweise 60 bis 100 °C, durchgeführt.

Der Dispergator der Formel (II) kann vor und/oder während der Salzknetung bzw. vor und/oder während der Lösemittelbehandlung in einer oder mehreren Portionen dem Kupferphthalocyaninpigment zugegeben werden.

Der Dispergator der Formel (II) selbst kann durch Salzbildung aus der Kupferphthalocyanin-Sulfonsäure der Formel (III)

CPC - (SO₃⁻)ₙ[Kat]ₒ⁺ (III)

worin CPC, Kat, n und o die vorstehend genannten Bedeutungen haben, sowie einer Ammoniumverbindung der Formel (IV) 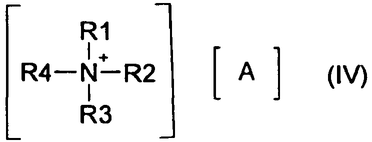 worin R¹, R², R³ und R⁴ die vorstehend genannten Bedeutungen haben, und A die Bedeutung Cl⁻, Br⁻, OH⁻, Acetat oder Formiat hat, hergestellt werden.

Es ist auch möglich, den Pigmentdispergator der Formel (II) in situ herzustellen, indem man beispielsweise Sulfonsäure(salz) der Formel (III) und Ammoniumsalz der Formel (IV) vor und/oder während der Salzknetung oder vor und/oder während der Lösemittelbehandlung getrennt zugibt.

Die erfindungsgemäß verwendete Pigmentzbereitung kann neben dem Kupferphthalocyaninpigment und dem Additiv der Formel (II) noch weitere übliche Hilfsmittel oder Zusatzstoffe enthalten, wie beispielsweise Tenside, nichtpigmentäre Dispergiermittel, Füllstoffe, Stellmittel, Harze, Wachse, Entschäumer, Antistaubmittel, Extender, Antistatika, Konservierungsmittel, Trocknungsverzögerungsmittel, Additive zur Steuerung der Rheologie, Netzmittel, Antioxidantien, UV-Absorber, Nuancierfarbmittel und Lichtstabilisatoren, vorzugsweise in einer Menge von 0,1 bis 25 Gew.%, insbesondere 0,5 bis 15 Gew.%, bezogen auf das Gesamtgewicht der Pigmentzubereitung.

Die erfindungsgemäß verwendeten Pigmentzubereitungen zeigen deutliche Verbesserungen gegenüber herkömmlichen Pigmenten auf Basis von Pigment Blue 15 insbesondere bei Verwendung in wässrigen, UV-härtenden sowie lösemittelbasierenden Tinten.

Hierbei zeigte sich, dass zum einen eine deutlich bessere Viskositätsstabilität gegenüber existierenden Pigmenten auf Basis von Pigment Blue 15 erreicht wurde und sich zum andern eine niedrigere Initialviskosität realisieren ließ. Diese Parameter beeinflussen maßgeblich die Fließeigenschaften der Tinte, die mögliche Tropfengröße und somit Auflösung wie auch Druckgeschwindigkeit. Außerdem zeigte sich, dass auch bei Alterung der Tinte diese Parameter einer deutlich geringeren Schwankung unterlagen als Tinten basierend auf herkömmlichen Blue 15 - Pigmenten.

Diese Eigenschaft bestätigte sich sogar nach Lagerung der Tinten für 28 Tage bei 60 °C, also sogar unter deutlich schärferen Bedingungen als im Standard-Test (40 °C, 1 Woche).

Die erfindungsgemäß verwendeten Pigmentzubereitungen eignen sich speziell zur Fertigung cyanfarbener Aufzeichnungsflüssigkeiten. Diese können auf Basis wässriger oder nichtwässriger Tintenstrahldruckverfahren arbeiten, sowie auf Basis von Mikroemulsionen, nach dem Hot-melt-Verfahren, aber auch für sonstige Vervielfältigungs-, Schreib-, Zeichen-, Markierungs-, Stempel-, Registrier- oder Druckverfahren, sowie für elektrophotographische Toner und Entwickler und für Farbfilter.

Die fertigen Aufzeichnungsflüssigkeiten enthalten im Allgemeinen insgesamt 0,1 bis 50 Gew.% der erfindungsgemäßen Pigmentzubereitung, 0 bis 99 Gew.% Wasser und 0,5 bis 99,5 Gew.% organisches Lösungsmittel und/oder Feuchthaltemittel. In einer bevorzugten Ausführungsform enthalten die Aufzeichnungsflüssigkeiten 0,5 bis 15 Gew.% Pigmentzubereitung, 35 bis 75 Gew.% Wasser und 10 bis 50 Gew.% organisches Lösungsmittel und/oder Feuchthaltemittel, in einer anderen bevorzugten Ausführungsform 0,5 bis 15 Gew.-% Pigmentzubereitung, 0 bis 20 Gew.% Wasser und 70 bis 99,5 Gew.-% organisches Lösungsmittel und/oder Feuchthaltemittel. Weiter können die erfindungsgemäß verwendeten Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z. B. Polyvinylalkohol, Cellulosederivate oder wasserlösliche natürliche oder künstliche Harze als Filmbildner bzw. Bindemitte zur Erhöhung der Haft- und Abriebfestigkeit.

Die erfindungsgemäß verwendeten Pigmentzubereitungen sowie die daraus hergestellten Ink-Jet-Tinten können auch mit anderen Farbmitteln wie beispielsweise anorganische oder organische Pigmente und/oder Farbstoffe nuanciert sein. Sie werden dabei in Tintensets, bestehend aus gelben, magenta, cyan und schwarzen Tinten, welche als Farbmittel Pigmente und/oder Farbstoffe enthalten, verwendet. Des Weiteren können sie in Tintensets verwendet werden, die zusätzlich eine oder mehrere Schmuckfarben (spot colors) beispielsweise orange, grün, blau und/oder Sonderfarben (Gold, Silber) enthalten.

Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation eine oder mehrere der erfindungsgemäß verwendeten Pigmentzubereitungen aus der Gruppe der Phthalocyaninpigmente enthält, ggf. nuanciert mit Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red 264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 150, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets noch Nuancierfarbstoffe enthalten, vorzugsweise aus der Gruppe C.I. Acid Yellow 3, C.I. Food Yellow 3, C.I. Acid Yellow 17 und C.I. Acid Yellow 23; C.I. Direct Yellow 86, C.I. Direct Yellow 28, C.I. Direct Yellow 51, C.I. Direct Yellow 98 und C.I. Direct Yellow 132; C.I. Reactive Yellow 37; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 18, C.I. Acid Red 52, C.I. Acid Red 80, C.I. Acid Red 81, C.I. Acid Red 82, C.I. Acid Red 87, C.I. Acid Red 94, C.I. Acid Red 115, C.I. Acid Red 131. C.I. Acid Red 144, C.I. Acid Red 152, C.I. Acid Red 154, C.I. Acid Red 186, C.I. Acid Red 245, C.I. Acid Red 249 und C.I. Acid Red 289; C.I. Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.I. Reactive Red 131, C.I. Reactive Red 137, C.I. Reactive Red 160, C.I. Reactive Red 161, C.I. Reactive Red 174 und C.I. Reactive Red 180, C.I. Acid Violet 48, C.I. Acid Violet 54, C.I. Acid Violet 66, C.I. Acid Violet 126, C.I. Acid Blue 1, C.I. Acid Blue 9, C.I. Acid. Blue 80, C.I. Acid Blue 93, C.I. Acid Blue 93:1, C.I. Acid Blue 182, C.I. Direct Blue 86, C.I. Direct Blue 199, C.I. Acid Green 1, C.I. Acid Green 16, C.I. Acid Green 25, C.I. Acid Green 81, C.I. Reactive Green 12, C.I. Acid Brown 126, C.I. Acid Brown 237, C.I. Acid Brown 289, C.I. Acid Black 194, C.I. Sulphur Black 1, C.I. Sulphur Black 2, C.I. Sol. Sulphur Black 1, C.I. Reactive Black 5, C.I. Reactive Black 31, C.I. Reactive Black 8; wobei die Reaktivfarbstoffe auch in deren teilweise oder gänzlich hydrolysierten Form vorliegen können. In den nachfolgenden Beispielen bedeuten Teile Gewichtsteile und Prozent Gewichtsprozent.

### Beispiel 1 (Vergleich): Salzknetung, Phthalimidomethylen-CuPc-Dispergator

Ein 1 I-Laborkneter (Werner & Pfleiderer) wurde mit 75 g Rohkupferphthalocyanin (beispielsweise hergestellt nach DE-A-2432564, Beispiel 1), 375 g **NaCl,** 3,75 g Phthalimidomethyl-Kupferphthalocyanin (hergestellt wie in EP 1 061 419, Beispiel 1) und 100 ml Diethylenglykol befüllt. Die Knetdauer beträgt 8 h und die Knettemperatur ca. 95 °C. Nach Beendigung der Knetung wird die Knetmasse in einen 6 I-Kolben überführt und mit 4000 ml verdünnter Salzsäure (5 gew.-%ig) für 2 h bei Raumtemperatur gerührt. Anschließend wird die Suspension abfiltriert, der Presskuchen mit Wasser gewaschen, in einem Konvektionsofen 16 h bei 80 °C getrocknet und mit einer IKA-Mühle pulverisiert. Man erhält 76 g einer Kupferphthalocyaninzubereitung mit den in Tabelle 1 angegebenen physikalischen Werten.

### Beispiel 2 (Vergleich): Schwingmahlung; CuPc-Sulfosäure-Dispergator

In einer nach dem zentrischen Schwingprinzip arbeitenden Schwingmühle bestückt mit Eisenstangen wird Rohkupferphthalocyanin (hergestellt wie in EP 1 061 419, Beispiel 1) gemahlen. Der Mahlkörperfüllgrad beträgt 75 %. Der Mahlgutfüllgrad beträgt 80 %. Es wird 90 Minuten gemahlen. Das Mahlgut wird in der 4-fachen Menge 5 gew.-%iger Schwefelsäure 2 Stunden bei 90 °C gerührt, die Suspension wird abgesaugt und der Presskuchen salzfrei gewaschen. Der wässrige Presskuchen hat einen Trockengehalt von 33 Gew.-%.

### Anschließende Lösemittelbehandlung:

303 g des so hergestellten Presskuchens werden in 240 g 53 gew.-%iger Natronlauge, 240 g Isobutanol angeschlämmt und dann mit 3 g Kupferphthalocyanin-Sulfonsäure (Sulfonierungsgrad ca. 1,5) versetzt. Die Mischung wird homogenisiert und für 3 h bei 135 °C unter Druck gerührt. Anschließend wird das Isobutanol abdestilliert und die destillierte Menge Lösemittel durch Wasser ersetzt. Die Suspension wird abfiltiert, der Presskuchen neutral gewaschen und getrocknet. Man erhält 102 g einer Kupferphthalocyaninzubereitung mit den in Tabelle 1 angegebenen physikalischen Werten.

### Beispiel 3

Ein 1 I-Laborkneter (Werner & Pfleiderer) wird mit 75 g Rohkupferphthalocyanin (beispielsweise hergestellt nach DE-A-2432564, Beispiel 1), 375 g NaCl und 100 ml Diethylenglykol befüllt. Die Knetdauer beträgt 8 h und die Knettemperatur ca. 95 °C. Nach Beendigung der Knetung wird die Knetmasse in einen 6 I-Kolben überführt und mit 4000 ml verdünnter Salzsäure (5 gew.-%ig) für 2 h bei Raumtemperatur gerührt. Anschließend wird die Suspension abfiltriert und der Presskuchen mit Wasser gewaschen. Der so erhaltene Pigmentfilterkuchen wird in 800 mL Wasser angeschlämmt und mit 6,5 g Kupferphthalocyanin-Sulfonsäure (Sulfonierungsgrad ca. 1,5) und mit 1,60 g (0,005 mol) Trimethylcetylammonium-chlorid für 2 h bei 80 °C gerührt. Die Suspension wird abfiltriert, gewaschen, in einem Konvektionsofen 16 h bei 80 °C getrocknet und mit einer IKA-Mühle pulverisiert. Man erhält 83 g einer Kupferphthalocyaninzubereitung mit den in Tabelle 1 angegebenen physikalischen Werten.

### Beispiel 4

Es wird eine Kupferphthalocyaninzubereitung analog Beispiel 3 hergestellt, mit dem einzigen Unterschied, dass 1,67 g (0,005 mol) Stearyltrimethylammoniumchlorid anstelle von Trimethylcetylammonium-chlorid eingesetzt werden.

### Beispiel 5

Es wird eine Kupferphthalocyaninzubereitung analog Beispiel 3 hergestellt, mit dem einzigen Unterschied, dass 2,86 g (0,005 mol) Distearyldimethylammoniumchlorid anstelle von Trimethylcetylammonium-chlorid eingesetzt werden.

### Beispiel 6

Es wird eine Kupferphthalocyaninzubereitung analog Beispiel 3 hergestellt, mit dem einzigen Unterschied, dass 1,63 g (0,005 mol)

Stearylbenzyldimethylammonium-chlorid anstelle von Trimethylcetylammonium-chlorid eingesetzt werden.

**Tabelle 1**

| Probe | d50 [nm] | Länge:Breite | Ladung [C/g] |
|---|---|---|---|
| Beispiel 1 (Vergleich) | 68 | 1,7:1 | -0,9 |
| Beispiel 2 (Vergleich) | 73 | 2,8:1 | -2,9 |
| Beispiel 3 | 72 | 1,9:1 | -3,0 |
| Beispiel 4 | 70 | 1,9:1 | -3,1 |
| Beispiel 5 | 74 | 1,8:1 | -3,2 |
| Beispiel 6 | 71 | 1,7:1 | -3,0 |

Für die Teilchengrößenverteilung wird eine Serie elektronenmikroskopischer Aufnahmen verwendet. Die Primärteilchen werden visuell identifiziert. Die Fläche jeden Primärteilchens wird Hilfe eines graphischen Tabletts bestimmt. Aus der Fläche wird der Durchmesser des flächengleichen Kreises ermittelt. Die Häufigkeitsverteilung der so berechneten Äquivalentdurchmesser wird bestimmt und die Häufigkeiten in Volumenanteile umgerechnet und als Teilchengrößenverteilung dargestellt. Der d₅₀ Wert gibt den Äquivalentdurchmesser an, für den gilt, dass 50 % der gezählten Teilchen kleiner sind.

Die Ladungsmessung der Pigmente erfolgt gemäß der,in "Electrostatics 1999; Inst. Phys. Conf. Ser. No 163, page 285, Streaming Current Charge versus Tribo Charge; R. Baur, H-T. Macholdt, E. Michel" beschriebenen Methode. Als Ergebnis wird die Ladung in Coulomb / Gramm Pigment wie in Tabelle 1 angegeben.

### Anwendungsbeispiel 1: Anreibungen für UV-härtende Inkjet-Tinten

Mit je 20 g Pigmentzubereitung aus den Beispielen 1, 2 bzw. 3, 78 g eines Acrylat-Oligomergemisches, 1 g eines polymeren Dispergiefillfsmittels und 1 g Stabilizer wird ein Konzentrat des Pigments hergestellt und mittels eines Paintshakers dispergiert.

Von den so erhaltenen Anreibungen wird ein Viskositätsprofil bei verschiedenen Scherraten ermittelt.

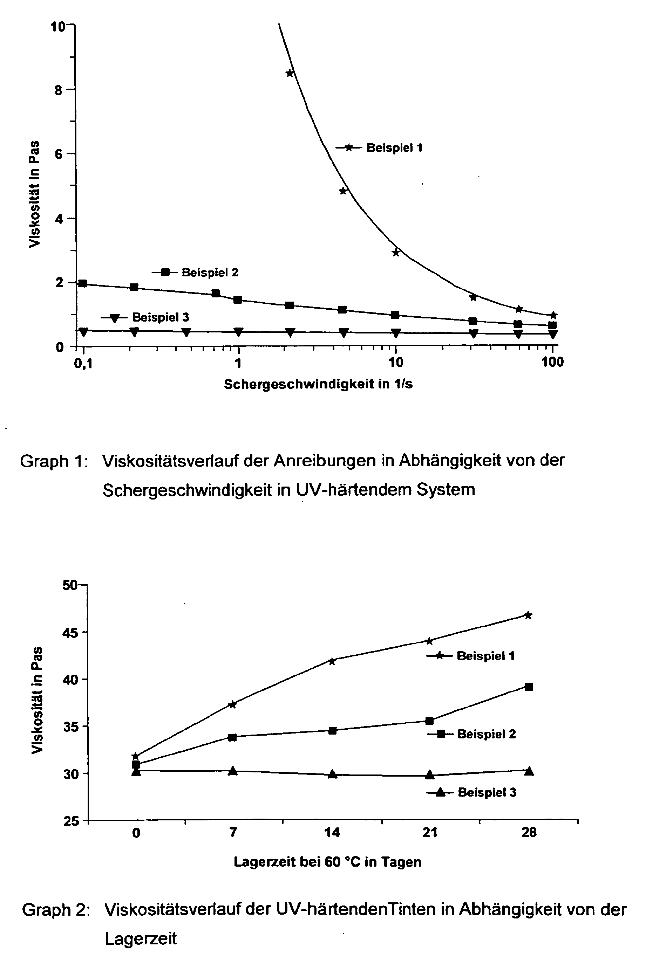

Man erhält bei der Anreibung mit der erfindungsgemäßen Pigmentzubereitung nach Beispiel 3 einen Viskositätsverlauf mit geringer Initialviskosität und geringer Viskositätsänderung in Abhängigkeit von der Scherung (Graph 1).

### Anwendungsbeispiel 2: UV-härtende Inkjet-Tinten

15 g der Konzentrate aus Anwendungsbeispiel 1 werden jeweils mit 76,6 g eines Acrylatmonomers, 8 g eines Photoinitiatorgemisches und 0,4 g eines Netzmittels zu einer Tinte gemischt.

Die so erhaltenen Tinten werden bei 60 °C warm gelagert. Die Viskosität wird bei Beginn, sowie nach 7, 14, 21 und 28 Tagen ermittelt.

Man erhält bei der Tinte mit der erfindungsgemäßen Pigmentzubereitung eine stabile Viskosität, die keine signifikante Änderung während der Warmlagerung aufzeigt (Graph 2).

### Anwendungsbeispiel 3: Anreibungen für lösemittelbasierende Inkjet-Tinten

Mit je 12 g einer Pigmentzubereitung gemäß Beispiel 1, 2 bzw. 3, 13,2 g eines PVC/PVAc-Copolymers und 74,8 g ®Dowanol PMA wird ein Konzentrat des Pigments hergestellt und mittels eines Paintshakers dispergiert.

Von den so erhaltenen Anreibungen wird ein Viskositätsprofil bei verschiedenen Scherraten ermittelt.

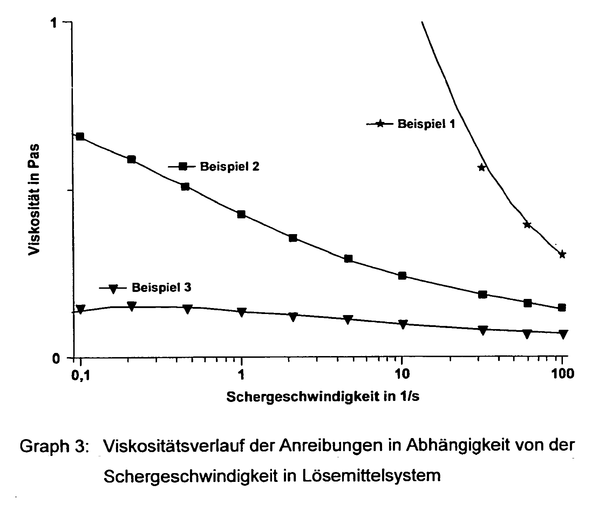

Man erhält bei der Anreibung mit der erfindungsgemäßen Pigmentzubereitung nach Beispiel 3 einen Viskositätsverlauf mit geringer Initialviskosität und geringer Viskositätsänderung in Abhängigkeit von der Scherung (Graph 3).

## Patentansprüche

1. Verwendung einer Pigmentzubereitung, enthaltend
(a) pigmentäres Kupfer-Phthalocyanin der beta-Phase, **gekennzeichnet durch** eine mittlere Teilchengröße d₅₀ von 40 bis 80 nm und ein mittleres Länge-Breite-Verhältnis der Pigmentteilchen von kleiner oder gleich 2,0 : 1; und
(b) 1 bis 30 Gew.%, bezogen auf das Gewicht des pigmentären Kupfer-Phthalocyanins, eines Pigmentdispergators der Formel (II) 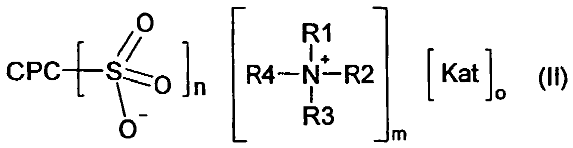 wobei
CPC ein Rest eines Kupferphthalocyanins,
n eine Zahl von 1 bis 4,0;
m eine Zahl von 0,5 bis 4,0;
Kat ein Kation aus der Gruppe der Alkalimetalle oder H⁺;
o eine Zahl von 0 bis 3,5, wobei n = m+o gilt;
R¹, R², R³, R⁴ gleich oder verschieden sind und C₁-C₂₀ -Alkyl, C₂-C₂₀-Alkenyl, C₅-C₂₀-Cycloalkyl, C₅-C₂₀-Cy_{d}oalkenyl oder C₁-C₄-Alkyl-phenyl bedeuten, wobei die vorstehend genannten Reste gegebenenfalls durch Hydroxy und/oder Halogen substituiert sind, bedeuten,
zum Pigmenturen von Inkjet-Tinten, elektrophotographischen Torrorn und Entwicklern und Farbfiltern.

2. verwendung nach Anspruch 1, **dadurch gekennzeichnet, dass**
R¹, R², R³ C-₁-C₄-Alkyl, und
R⁴ C₁₂-C₂₀-Alkyl, C₁₂-C₂₀-Alkenyl, C₆-C₂₀-Cycloalkyl, C₆-C₂₀-Cycloalkenyl oder Benzyl bedeuten, wobei die vorstehend genannten Reste gegebenenfalls durch Hydroxy und/oder Halogen substituiert sind.

3. Verwendung nach Anspruch 1 oder 2, **dadurch gekennzeichnet, dass**
R¹, R² C₁-C₄-Alkyl, und
R³, R⁴ C₆-C₂₀-Alkyl, C₆-C₂₀-Alkenyl, C₆-C₂₀-Cycloalkyl, C₆-C₂₀-Cycloalkenyl oder Benzyl bedeuten, wobei die vorstehend genannten Reste gegebenenfalls durch Hydroxy und/oder Halogen substituiert sind.

4. Verwendungn nach Anspruch 1 oder 2, **dadurch gekennzeichnet, dass**
R¹, R², R³ Methyl, und
R⁴ C₁₄-C₂₀-Alkyl oder C₁₄-C₂₀-Alkenyl bedeuten.

5. Verwendung nach einem oder mehreren der AnsprUche 1 bis 4, **gekennzeichnet durch** eine mittlere Teilchengröße d₅₀ von 50 bis 75 nm.

6. Verwendung nach einem oder mehreren der Ansprüche 1 bis 5, **gekennzeichnet durch** ein mittleres Länge-Breite-Verhältnis der Pigmentteilchen von 1 ,6 : 1 bis 1,9 : 1.

7. Verwendung nach einem oder mehreren der Ansprüche 1 bis 6, **gekennzeichnet durch** einen Gehalt von 5 bis 20 Gew.%, bezogen auf das Gewicht des pigmentären Kupfer-Phthalocyanins, eines Pigmentdispergators der Formel (II).

8. Verwendung nach Anspruch 1 bis 7 zum Pigmentieren von lösemittelhaltigen Inkjet-Tinten und UV-härtenden Inkjet-Tinten.

## Claims

1. The use of a pigment preparation comprising
(a) pigmentary, beta-phase copper phthalocyanine **characterized by** an average particle size d₅₀ of 40 to 80 nm and an average pigment particle length-to-width ratio of less than or equal to 2.0:1; and
(b) 1 % to 30% by weight, based on the weight of the pigmentary copper phthalocyanine, of a pigment dispersant of the formula (II) 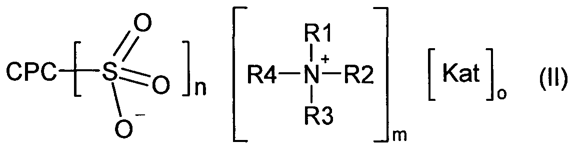 where
CPC is a radical of a copper phthalocyanine,
n is a number from 1 to 4.0;
m is a number from 0.5 to 4.0;
Kat is a cation from the group of the alkali metals or H⁺;
o is a number from 0 to 3.5, with n = m+o;
R¹, R², R³, and R⁴ are identical or different and are C₁-C₂₀ alkyl, C₂-C₂₀ alkenyl, C₅-C₂₀ cycloalkyl, C₅-C₂₀ cycloalkenyl or C₁-C₄ alkyl-phenyl, the aforesaid radicals being optionally substituted by hydroxyl and/or halogen,
for pigmenting inkjet inks, electrophotographic toners and developers, and color filters.

2. The use as claimed in claim 1, wherein
R¹, R², and R³ are C₁-C₄ alkyl, and
R⁴ is C₁₂-C₂₀ alkyl, C₁₂-C₂₀ alkenyl, C₆-C₂₀ cycloalkyl, C₆-C₂₀ cycloalkenyl or benzyl, the aforesaid radicals being optionally substituted by hydroxyl and/or halogen.

3. The use as claimed in claim 1 or 2, wherein
R¹ and R² are C₁-C₄ alkyl, and
R³ and R⁴ are C₆-C₂₀ alkyl, C₆-C₂₀ alkenyl, C₆-C₂₀ cycloalkyl, C₆-C₂₀ cycloalkenyl or benzyl, the aforesaid radicals being optionally substituted by hydroxyl and/or halogen.

4. The use as claimed in claim 1 or 2, wherein
R¹, R², and R³ are methyl, and
R⁴ is C₁₄-C₂₀ alkyl or C₁₄-C₂₀ alkenyl.

5. The use as claimed in one or more of claim 1 to 4, **characterized by** an average particle size d₅₀ of 50 to 75 nm.

6. The use as claimed in one or more of claims 1 to 5, **characterized by** an average pigment particle length-to-width ratio of 1.6:1 to 1.9:1.

7. The use as claimed in one or more of claims 1 to 6, **characterized by** the presence therein of 5% to 20% by weight, based on the weight of the pigmentary copper phthalocyanine, of a pigment dispersant of the formula (II).

8. The use as claimed in claims 1 to 7 for pigmenting solvent-based inkjet inks and UV-curing inkjet inks.

## Revendications

1. Utilisation d'une préparation de pigment, contenant
(a) de la phtalocyanine de cuivre pigmentaire de la phase bêta, **caractérisée par** une taille moyenne de particule d₅₀ de 40 à 80 nm et un rapport longueur-largeur moyen des particules de pigment inférieur ou égal à 2,0:1 ; et
(b) 1 à 30 % en poids, par rapport au poids de la phtalocyanine de cuivre pigmentaire, d'un dispersant pigmentaire de formule (II) 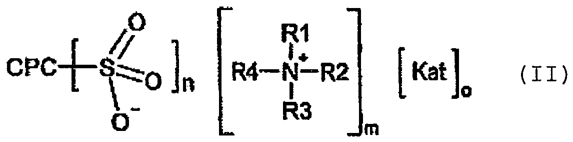 dans laquelle
CPC représente un reste d'une phtalocyanine de cuivre,
n représente un nombre valant de 1 à 4,0 ;
m représente un nombre valant de 0,5 à 4,0 ;
Kat représente un cation choisi dans le groupe des métaux alcalins ou H⁺ ;
O représente un nombre valant de 0 à 3,5, n étant égal à m+o ;
R¹, R², R³, R⁴ sont identiques ou différents et représentent un groupe alkyle en C₁-C₂₀, alcényle en C₂-C₂₀, cycloalkyle en C₅-C₂₀, cycloalcényle en C₅-C₂₀ ou alkyl(C₁-C₄)-phényle, les radicaux nommés précédemment étant éventuellement substitués par hydroxy et/ou halogène,
pour la pigmentation d'encres pour impression par jet d'encre, toners et développeurs électrophotographiques et filtres colorés.

2. Utilisation selon la revendication 1, **caractérisée en ce que**
R¹, R², R³ représentent un groupe alkyle en C₁-C₄, et
R⁴ représente un groupe alkyle en C₁₂-C₂₀, alcényle en C₁₂-C₂₀. cycloalkyle en C₆-C₂₀, cycloalcényle en C₆-C₂₀ ou benzyle, les radicaux nommés précédemment étant éventuellement substitués par hydroxy et/ou halogène.

3. Utilisation selon la revendication 1 ou 2, **caractérisée en ce que**
R¹, R² représentent un groupe alkyle en C₁-C₄, et
R³, R⁴ représentent un groupe alkyle en C₆-C₂₀, alcényle en C₆-C₂₀, cycloalkyle en C₆-C₂₀, cycloalcényle en C₆-C₂₀ ou benzyle, les radicaux nommés précédemment étant éventuellement substitués par hydroxy et/ou halogène.

4. Utilisation selon la revendication 1 ou 2, **caractérisée en ce que**
R¹, R², R³ représentent le groupe méthyle, et
R⁴ représente un groupe alkyle en C₁₄-C₂₀ ou alcényle en C₁₄-C₂₁.

5. Utilisation selon une ou plusieurs des revendications 1 à 4, **caractérisée par** une taille moyenne de particule d₅₀ de 50 à 75 nm.

6. Utilisation selon une ou plusieurs des revendications 1 à 5, **caractérisée par** un rapport longueur-largeur moyen des particules de pigment de 1,6 : 1 à 1,9 : 1.

7. Utilisation selon une ou plusieurs des revendications 1 à 6, **caractérisée par** une teneur de 5 à 20 % en poids, par rapport au poids de la phtalocyanine de cuivre pigmentaire, d'un dispersant pigmentaire de formule (II) ;

8. Utilisation selon l'une quelconque des revendications 1 à 7, pour la pigmentation d'encres pour impression par et d'encre durcissables aux UV et d'encres pour impression par jet d'encre contenant un solvant.
